# EUROPEAN PATENT APPLICATION

(11) **EP 3 179 698 A1**
(43) Date of publication of application: **14.06.2017**
(21) Application number: 14891130.8
(22) Date of filing: 20.10.2014
(51) Int. Cl.: H04L 29/08

(54) **SYSTEM AND METHOD FOR IMPLEMENTING COLLECTION, MANAGEMENT AND AUTHORIZATION OF PERSONAL BIG DATA**

(30) Priority: 05.08.2014 CN 201410380502
(71) Applicant: Ausxin Infotech (Shanghai) Co., Ltd., Shanghai 201203 (CN)
(72) Inventor: PAN, Feng, Shanghai 201203 (CN)
(74) Representative: dompatent von Kreisler Selting Werner - Partnerschaft von Patent- und Rechtsanwälten mbB
(86) International application number: PCT/CN2014/088894
(87) International publication number: WO 2016/019632

(57) **Abstract**

The present invention relates to a system to realize personal big data collection, management and authorization, which includes several clients and a big data server, the present invention also relates to a method to realize big data collection, management and authorization, the several clients collect the data of the logged-in users on the clients automatically, and upload the data of the logged-in users to the big data server, and authorize selectively to data authorization requests sent from the big data server according to the target users' operations; the big data server queries to get target users conforming to the data authorization requests, and pushes the data authorization requests to the clients which the target users have currently logged in, and sends the authorized data of the users who have agreed to authorize to the enterprise according to authorization feedback information of the client which the target users have logged in. Utilizing the present invention of the system and method to realize personal big data collection, management and authorization, the client collects user's personal data automatically, enabling the user to authorize his/her own personal data to the enterprise selectively and get money or material rewards, it has a wide application range.

## Description

### Field of Technology

The present invention relates to personal data management area, especially to personal big data collection, management and authorization area, in particular to a system and method to realize personal big data collection, management and authorization.

### Description of Related Arts

As the Internet technology, especially the mobile Internet technology represented by smart phone applications (App) is infiltrating people's daily life, the human beings are being digitized, which includes but not limited to the following aspects:
1. Behavior digitization: firstly the consumption behavior is being digitized, individual buys goods or services through e-commerce website or smart phone App, the related consumption behaviors including searching, browsing, downloading, payment and etc are all recorded in the form of data; secondly the physical location is digitized, through the "location service" of smart phone, the smart phone App can get the related data of personal physical location in real time; lastly the searching and reading are digitized, individual searches and browses information through search engine, and individual reads and browses news or articles through web portals, the related searching and reading will all be recorded in the form of data.
2. Body digitization: through all kinds of wearable devices, such as sports bracelets, smart watches and so on, all kinds of data of individual body such as heart beat, sleeping, amount of exercise and calorie consumption can all be recorded in the form of data.
3. Seeing digitization: through the device such as Google Glass, all figures man sees with eyes and even the sounds man hears will all be recorded in the form of data.

The size of data covering all behavior, body, seeing of one man every day is very large, it can even get to the magnitude of more than TB as days go by, so it can be called personal "big" data in summary. Currently, the personal big data is mostly collected, stored, analyzed and utilized by big Internet companies through website, smart phone App and smart connected device, as the data resource for advertisement, marketing and credit investigation. However, individual as the original owner of data cannot have a full record of personal big data and cannot enjoy the value of data analysis. At the same time, there are some companies in the market, engaged in commercial profit-gaining activities such as personal data collection, analysis, trading and so on without explicit authorizations from individuals, it not only infringes the individual's ownership of his/her own data, and also brought to individuals potential damages of information leakage, marketing harassment/telephone phishing, identity theft and so on. Besides, in the whole personal big data's industry value chain, individuals as the original data owner don't get any monetary or material benefit sharing, this is extremely unfair to individuals.

### Summary of the Invention

The present invention aims to overcome the drawbacks of the prior arts above, and provides a system and method to realize personal big data collection, management and authorization which collect and store the users' personal big data automatically, support the users to authorize their personal big data selectively to enterprises to get rewards of money and material.

To achieve the above-mentioned objectives, the present invention has the following composition:
The system to realize personal big data collection, management and authorization, is characterized in that, the system includes several clients and a big data server, in which:
   Several clients, used to collect the data of the logged-in users on the clients automatically, and upload the data of the logged-in users to big data server, and authorize selectively to data authorization requests sent from the big data server according to the target users' operations;
   Big data server, used to analyze data authorization requests sent from enterprises and query to get target users conforming to the data authorization requests, and push the data authorization requests to the clients which the target users have currently logged in, and send the authorized data of the target users who have agreed to authorize to the enterprise according to authorization feedback information of the client which the target users have currently logged in.

Furthermore, the client has a user big data collection module, a server communication module, a data management module, and a client data authorization module, wherein:
The user big data collection module, used to collect data of the logged-in users on the clients automatically and send the data of the logged-in users to the server communication module;
The server communication module, used to connect to the big data server, and communicate information with the big data server;
The data management module, used to generate the corresponding data management operation instructions based on target users' operations, and send the data management operation instructions to the server communication module;
The client data authorization module, used to receive the data authorization requests forwarded by the server communication module for the currently logged-in target users, and generate instructions of authorized or not-authorized as the authorization feedback information according to the target users' operations, and send the authorization feedback information to the server communication module.

Furthermore, the user big data collection module has an open interface unit, an automatic capture unit, and a scanning & analysis unit, wherein:
The open interface unit, used to connect to the data interface of other operating system or application software, and collect the data of the logged-in user on the client automatically through the data interface;
The automatic capture unit, used to automatically captures and analyzes the display information on the client's screen and the user's input information, and collects the data of the logged-in user through the display information and input information;
The scanning analysis unit, used to analyze the client's picture material or scanning material to get the logged-in user's data, and upload the picture material or scanning material which cannot be analyzed by itself to the big data server for further analysis.

The big data server has a server data analysis module, which is used to further analyze the picture material or scanning material uploaded by the scanning analysis unit which cannot be analyzed by itself, and get the data of the logged-in user.

Furthermore, the client has a client revenue management module, a data product management module, wherein:
The client revenue management module, used to retrieve the transaction information stored in the big data server according to the logged-in user's operations, and manage the logged-in user's bank account according to the logged-in user's operations;
The data product management module, used to generate the corresponding data product management instructions according to the logged-in user's operations, and send the data product management instructions to the big data server.

Furthermore, the client has a user basic information management module, the user basic information management module is used to generate personal basic information management instructions according to the logged-in user's operations, and send the personal basic information management instructions to the big data server.

Furthermore, the big data server has a client communication module, an enterprise interface module, and an authorization management module, wherein:
The client communication module, used to connect to the several clients, and communicate information with the several clients through the Internet or local network;
The enterprise interface module, used to receive the data authorization requests sent by the enterprises, and send the data authorization requests to the authorization management module, and process the authorized data and send the processed authorized data to the enterprises;
The authorization management module, used to analyze the data authorization requests and query to get the target users conforming to the data authorization requests, and send the data authorization requests to the client communication module which the target users have logged in, and according to authorization feedback information of the client which the target users have logged in transmitted by the client communication module to retrieve the authorized data of the target users who have agreed to authorize to send to the enterprise interface module.

Furthermore, the big data server also includes a data product module and a revenue management module, wherein:
The data product module, used to process the user's data stored in the big data server and generate all kinds of data products;
The server revenue management module, used to record and process the transaction information between the user and the enterprise, and transfer the transaction revenue to the user's bank account.

Furthermore, the big data server also includes a user registration & login authentication module, the user registration & login authentication module is used to add new user information in the big data server, and provide authentication information when user log in.

Furthermore, the big data server also includes a data storage module, the data storage module is used to store in classification the users' personal information, the logged-in users' data, the data corresponding to the data products, the authorized data and other data of the big data server.

Moreover, the present invention also provides a method to realize personal big data collection based on the above system, which is characterized in that, the method specifically is:
The client collects the data of the logged-in user on the client automatically, and uploads the data of the logged-in user to the big data server.

Furthermore, the client has a user big data collection module and a server communication module, the client collects the data of the logged-in user on the client automatically, and uploads the data of the logged-in user to the big data server, including the following steps:
(1.1) the server communication module connects to the big data server;
(1.2) the user big data collection module collects data of the logged-in user on the client automatically and sends the data of the logged-in user to the server communication module;
(1.3) the server communication module sends the data of the logged-in user to the big data server.

Furthermore, the user big data collection module has an open interface unit, the user big data collection module collects data of the logged-in user on the client automatically, including the following steps:
(1.2.1) the user big data collection module judges whether it has received the control instruction to activate the open interface unit;
(1.2.2) if the judgement result is having received the control instruction to activate the open interface unit, then continue to step (1.2.3), otherwise return to the above step (1.2);
(1.2.3) the open interface unit connects to the data interface of other operating system or application software, and collects the data of the logged-in user on the client automatically through the data interface.

Furthermore, the user big data collection module has an automatic capture unit, the user big data collection module collects data of the logged-in user on the client automatically, including the following steps:
(1.2.a) the user big data collection module judges whether it has received control instruction to activate the automatic capture unit;
(1.2.b) if the judgement result is having received the control instruction to activate the automatic capture unit, then continue to step (1.2.c), otherwise return to the above step (1.2);
(1.2.c) the automatic capture unit automatically captures and analyzes the display information on the client's screen and the user's input information, and collects the data of the logged-in user through the display information and input information.

Furthermore, the user big data collection module has a scanning & analysis unit, the user big data collection module collects data of the logged-in user on the client automatically, including the following steps:
(1.2.A) the user big data collection module judges whether it has received the control instruction to activate the scanning analysis unit;
(1.2.B) if the judgement result is having received the control instruction to activate the scanning analysis unit, then continue to step (1.2.C), otherwise return to the above step (1.2);
(1.2.C) the scanning analysis unit analyzes the client's picture material or scanning material and gets the logged-in user's data.

Furthermore, after the step (1.2C), further includes the following steps:
(1.2.D) the scanning analysis unit judges whether there is picture material or scanning material which cannot be analyzed by itself;
(1.2.E) if the judgement result is that there is picture material or scanning material which cannot be analyzed by itself, then continue to step (1.2.F), otherwise continue to step (1.1.2);
(1.2.F) the scanning analysis unit sends the picture material or scanning material which cannot be analyzed by itself to the server communication module;
(1.2.G) the server communication module uploads the picture material or scanning material which cannot be analyzed to the big data server.

Furthermore, the big data server has a server data analysis module, after the step (1.2.G), there are also the following steps:
(1.2.H) the server data analysis module further analyzes the picture material or scanning material which cannot be analyzed initially, and get the logged-in user's data.

Moreover, the present invention also provides a method to realize personal big data management and authorization, which is characterized in that, the method includes the following steps:
(a) the big data server analyzes data authorization requests sent from enterprises, and queries to get target users conforming to the data authorization requests;
(b) the big data server pushes the data authorization requests to the clients which the target users logged in;
(c) the client processes corresponding authorization dispositions to the data authorization requests sent from the big data server according to the target users' authorization selection operations;
(d) the big data server sends the authorized data of the target users who have agreed to authorize to the enterprise according to authorization feedback information of the client which the target users have logged in.

Furthermore, the big data server has an enterprise interface module and an authorization management module, the big data server analyzes data authorization requests sent from enterprises, and queries to get target users conforming to the data authorization requests, including the following steps:
(a.1) the enterprise interface module receives the data authorization requests sent by the enterprises, and sends the data authorization requests to the authorization management module;
(a.2) the authorization management module analyzes the data authorization requests, and queries to get target users conforming to the data authorization requests.

Furthermore, the authorization management module analyzes the data authorization requests, and queries to get target users conforming to the data authorization requests, including the following steps:
(a.2.1) the authorization management module analyzes the data authorization requests and gets multiple data selection criteria;
(a.2.2) the authorization management module judges whether each data selection criteria is standard selection criteria;
(a.2.3) if the judgement result is the data selection criteria is standard selection criteria, then continue to step (a.2.4), otherwise continue to step (a.2.5);
(a.2.4) the authorization management module automatically transforms the data authorization requests into database query statements which can be executed automatically by the big data server program, and queries to get the target users conforming to the data authorization requests, and return to the above step (b);
(a.2.5) the service provider of the big data server contacts the enterprise, and understands the concrete meaning and requirement of non-standard selection criteria, then return to the above step (a.2.4).

Furthermore, the big data server has a client communication module, the client has a server communication module, the big data server pushes the data authorization requests to the clients which the target users have logged in, including the following steps:
(b.1) the authorization management module queries to get the information of the clients which the target users have logged in currently;
(b.2) the authorization management module sends the information of the clients which the target users have logged in currently to the client communication module;
(b.3) the client communication module pushes the data authorization requests to the server communication module of the clients which the target users have logged in currently according to the information of the clients which the target users have logged in currently.

Furthermore, the authorization management module queries to get the information of the clients which the target users have logged in currently, including the following steps:
(b.1.1) the authorization management module judges whether there are target users in the currently logged-in users according to information of the target users;
(b.1.2) if the judgement result is there are target users logged in, then continue to step (b.1.3), otherwise continue to step (b.1.4);
(b.1.3) the authorization management module records the information of the clients which the target users have logged in currently, and continue to the above step (b.2);
(b.1.4) the authorization management module feedbacks information to the big data server that there is no target user logged in, and returns to the above step (b.1.1).

Furthermore, the client has a client data authorization module, the client processes corresponding authorization dispositions to the data authorization requests sent from the big data server according to the target users' authorization selection operations, including the following steps:
(c.1) the client data authorization module receives the data authorization requests forwarded by the server communication module;
(c.2) the client data authorization module displays the data authorization requests, and generates instructions of authorized or not-authorized as the authorization feedback information according to the target users' operations, and sends the authorization feedback information to the server communication module;
(c.3) the server communication module uploads the authorization feedback information to the big data server.

Furthermore, the big data server has an authorization management module, the big data server sends the authorized data of the target users who have agreed to authorize to the enterprise according to authorization feedback information of the client which the target users have logged in, including the following steps:
(d.1) the client communication module receives the authorization feedback information uploaded through the server communication module by the client that the target users logged in and sends the authorization feedback information to the authorization management module;
(d.2) the authorization management module retrieves the corresponding authorized data according to the authorization feedback information to the enterprise interface module;
(d.3) the enterprise interface module sends the authorized data to the enterprise.

Furthermore, the big data server also has a data product module, after step (d), it also includes the following steps:
(e) the data product module processes users' data and generates all kinds of data products.

Furthermore, the client has a data product management module, after step (e), there are also the following steps:
(f) the data product management module generates the corresponding data product management instructions according to the logged-in user's operations, and sends the data product management instructions to the server communication module;
(g) the server communication module synchronizes the data product management instructions to the client communication module;
(h) the big data server manages the data products according to the data product management instructions.

Furthermore, the client has a user basic information management module, before step (a), there are also the following steps:
(0.1) the user basic information management module generates personal basic information management instructions according to the user's operations, and sends the personal basic information management instructions to the server communication module;
(0.2) the server communication module synchronizes the personal basic information management instructions to the client communication module.
(0.3) the big data server manages the personal basic information according to the personal basic information management instructions.

Furthermore, the big data server also has a user registration & login authentication module, after step (0.3), there is also the following step:
(0.4) the user registration & login authentication module adds new user information in the big data server, and provides authentication information when user logs in.

Furthermore, the big data server has a server revenue management module, after step (e), there is also the following step:
(F) the server revenue management module records and processes the transaction information between the user and the enterprise, and transfers the transaction revenue to the user's bank account.

Furthermore, the client has a client revenue management module, after step (F), there is also the following step:
(G) the client revenue management module retrieves the transaction information according to the user's operations through the server communication module, and manages the user's bank account according to the user's operations.

Furthermore, it is characterized in that, between steps (a) and (b), there is also the following step:
(a.a) the big data server classifies the data automatically based on the data characteristic, data source and data timestamp.

Furthermore, it is characterized in that, the big data server also includes a data storage module, after step (e), there is also the following step:
(e.a) the data storage module stores the users' personal basic information, the logged-in users' data, the data corresponding to the data products, the authorized data and other system data.

Utilizing the present invention of the system and method to realize personal big data collection, management and authorization, the user's personal data can be collected and stored automatically, it supports the user to view and manage his/her own personal data, and it supports the user to authorize his/her own personal data to interested enterprise and get money or material rewards. At the same time, the present invention supports processing of the user's personal data such as preparation, analysis, summarization, correlation and so on, and provides results to the user in the form of data products, gives useful information to individual and family in the aspects of life management, financial management, decision support and so on, so that the user can enjoy the value of data analysis and mining, it has a wider application range.

### Brief Description of the Drawings

Fig. 1 is the structure diagram of the system to realize personal big data collection, management and authorization.
Fig. 2 is the flow diagram of the method to realize personal big data management and authorization.
Fig. 3 is the flow diagram of a specific embodiment of the method to realize personal big data collection, management and authorization.
Fig. 4 is the flow diagram of authorization & payment process of the method to realize personal big data management and authorization.

### Detailed Description of the Preferred Embodiment

In order to describe the technical content of the present invention more clearly, now describe it further combining specific embodiments.

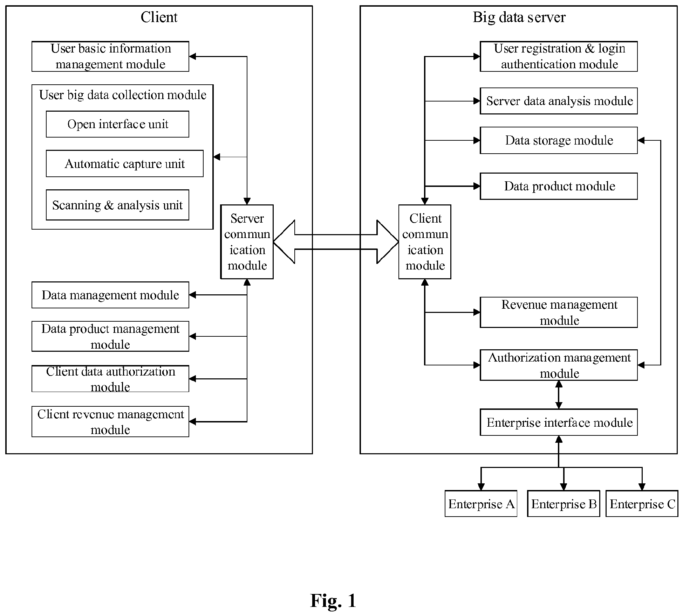

Please refer to Fig. 1, in one specific embodiment of the present invention, the system to realize personal big data collection, management and authorization includes several clients and a big data server, in which:
Several clients, used to collect the data of the logged-in users on the clients automatically, and upload the data of the logged-in users to big data server, and authorize selectively to data authorization requests sent from the big data server according to the target users' operations;
Big data server, used to analyze data authorization requests sent from enterprises and query to get target users conforming to the data authorization requests, and push the data authorization requests to the clients which the target users have currently logged in, and send the authorized data of the target users who have agreed to authorize to the enterprise according to authorization feedback information of the client which the target users have currently logged in.

In a preferred embodiment of the present invention, the client has a user big data collection module, a server communication module, a data management module, and a client data authorization module, wherein:
The user big data collection module, used to collect data of the logged-in users on the clients automatically and send the data of the logged-in users to the server communication module;
The server communication module, used to connect to the big data server, and communicate information with the big data server, the information communication includes uploading, downloading, synchronization and so on of all kinds of data and files;
The data management module, used to generate the corresponding data management operation instructions based on target users' operations, and send the data management operation instructions to the server communication module, the data management module supports the user to view and manage personal big data record, including adding, editing and deleting data, and adjusting the classification of data;
The client data authorization module, used to receive the data authorization requests forwarded by the server communication module for the currently logged-in target users , and generate instructions of authorized or not-authorized as the authorization feedback information according to the target users' operations, and send the authorization feedback information to the server communication module, besides, the client data authorization module supports user viewing and authorizing the data authorization requests of enterprises, and support user viewing and managing revenue generated by authorizing data.

In a more preferred embodiment of the present invention, the user big data collection module has an open interface unit, an automatic capture unit, and a scanning & analysis unit, wherein:
The open interface unit, used to connect to the data interface of other operating system or application software, and collect the data of the logged-in user on the client automatically through the data interface;
The automatic capture unit, used to automatically capture and analyze the display information on the client's screen and the user's input information, and collect the data of the logged-in user through the display information and input information;
The scanning analysis unit, used to analyze the client's picture material or scanning material to get the logged-in user's data, such as photographing or scanning the bill statement, order form, transaction record, bar code and so on in paper form or electric form, and analyze automatically and get the related data through technical means such as optical character recognition (OCR), decode and so on, and upload the picture material or scanning material which cannot be analyzed by itself to the big data server for further analysis.

In a more preferred embodiment of the present invention, the big data server has a server data analysis module, and the data analysis module is used to further analyze the picture material or scanning material uploaded by the scanning analysis unit which cannot be analyzed by itself, and get the data of the logged-in user.

In a preferred embodiment of the present invention, the client has a client revenue management module and a data product management module, wherein:
The client revenue management module, used to retrieve the transaction information stored in the big data server according to the logged-in user's operations, and manage the logged-in user's bank account according to the logged-in user's operations;
The data product management module, used to generate the corresponding data product management instructions according to the logged-in user's operations, and send the data product management instructions to the big data server.

In a preferred embodiment of the present invention, the client has a user basic information management module, the user basic information management module is used to generate personal basic information management instructions according to the logged-in user's operations, and send the personal basic information management instructions to the big data server, the user basic information management module supports the user to maintain his/her own basic information such as name, nickname, gender, address, contact number and so on.

Wherein, the several clients are a kind of application software, including many versions running on all kinds of different personal smart connected devices (for example: smart phone, personal computer/PC, PAD, wearable devices and so on).

In a preferred embodiment of the present invention, the big data server has a client communication module, an enterprise interface module, and an authorization management module, wherein:
The client communication module, used to connect to the several clients, and communicate information with the several clients through the Internet or local network;
The enterprise interface module, used to receive the data authorization requests sent by the enterprises, and send the data authorization requests to the authorization management module, and process the authorized data and send the processed authorized data to the enterprises;
The authorization management module, used to analyze the data authorization requests and query to get the target users conforming to the data authorization requests, and send the data authorization requests to the client communication module which the target users have logged in, and according to authorization feedback information of the client which the target users have logged in transmitted by the client communication module to retrieve the authorized data of the target users who have agreed to authorize to send to the enterprise interface module, before retrieving data the authorization decisions corresponding to user's authorization feedback information can be recorded.

In a preferred embodiment of the present invention, the big data server also includes a data product module and a revenue management module, wherein:
The data product module, used to process the user's data stored in the big data server and generate all kinds of data products, the processing includes preparation, analysis, summarization, correlation and so on;
The server revenue management module, used to record and process the transaction information between the user and the enterprise, and transfer the transaction revenue to the user's bank account, the processing includes summarizing and calculating the transaction information.

In a preferred embodiment of the present invention, the big data server also includes a user registration & login authentication module, the user registration & login authentication module is used to add new user information in the big data server, and provide authentication information when user log in.

In a preferred embodiment of the present invention, the big data server also includes a data storage module, the data storage module is used to store in classification the users' personal information, the logged-in users' data, the data corresponding to the data products, the authorized data and other data of the big data server.

Moreover, the present invention also provides a method to realize personal big data collection based on the above system, the method specifically is:
The client collects the data of the logged-in user on the client automatically, and uploads the data of the logged-in user to the big data server.

In a preferred embodiment of the present invention, the client has a user big data collection module and a server communication module, the client collects the data of the logged-in user on the client automatically, and uploads the data of the logged-in user to the big data server, including the following steps:
(1.1) the server communication module connects to the big data server;
(1.2) the user big data collection module collects data of the logged-in user on the client automatically and sends the data of the logged-in user to the server communication module;
(1.3) the server communication module sends the data of the logged-in user to the big data server.

In a more preferred embodiment of the present invention, the user big data collection module has an open interface unit, the user big data collection module collects data of the logged-in user on the client automatically, including the following steps:
(1.2.1) the user big data collection module judges whether it has received the control instruction to activate the open interface unit;
(1.2.2) if the judgement result is having received the control instruction to activate the open interface unit, then continue to step (1.2.3), otherwise return to the above step (1.2);
(1.2.3) the open interface unit connects to the data interface of other operating system or application software, and collects the data of the logged-in user on the client automatically through the data interface.

In a more preferred embodiment of the present invention, the user big data collection module has an automatic capture unit, the user big data collection module collects data of the logged-in user on the client automatically, including the following steps:
(1.2.a) the user big data collection module judges whether it has received control instruction to activate the automatic capture unit;
(1.2.b) if the judgement result is having received the control instruction to activate the automatic capture unit, then continue to step (1.2.c), otherwise return to the above step (1.2);
(1.2.c) the automatic capture unit automatically captures and analyzes the display information on the client's screen and the user's input information, and collects the data of the logged-in user through the display information and input information.

In a more preferred embodiment of the present invention, the user big data collection module has a scanning & analysis unit, the user big data collection module collects data of the logged-in user on the clients automatically, including the following steps:
(1.2.A) the user big data collection module judges whether it has received the control instruction to activate the scanning analysis unit;
(1.2.B) if the judgement result is having received the control instruction to activate the scanning analysis unit, then continue to step (1.2.C), otherwise return to the above step (1.2);
(1.2.C) the scanning analysis unit analyzes the client's picture material or scanning material and gets the logged-in user's data.

In a more preferred embodiment of the present invention, after the step (1.2C), further includes the following steps:
(1.2.D) the scanning analysis unit judges whether there is picture material or scanning material which cannot be analyzed by itself;
(1.2.E) if the judgement result is that there is picture material or scanning material which cannot be analyzed by itself, then continue to step (1.2.F), otherwise continue to step (1.1.2);
(1.2.F) the scanning analysis unit sends the picture material or scanning material which cannot be analyzed by itself to the server communication module;
(1.2.G) the server communication module uploads the picture material or scanning material which cannot be analyzed to the big data server.

In a more preferred embodiment of the present invention, the big data server has a server data analysis module, after the step (1.2.G), there are also the following steps:
(1.2.H) the server data analysis module further analyzes the picture material or scanning material which cannot be analyzed initially, and get the logged-in user's data.

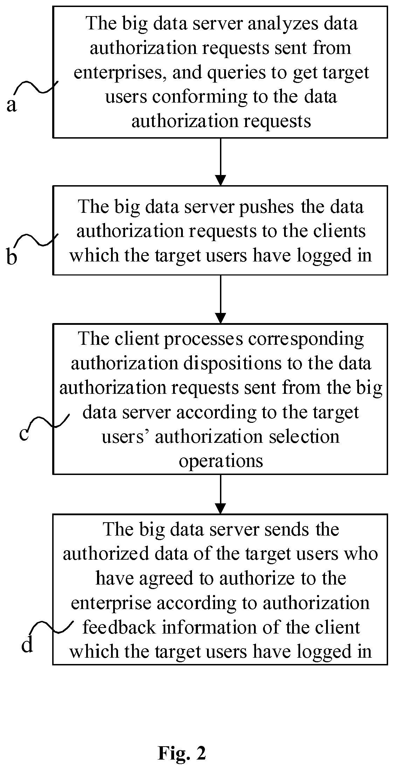

Moreover, the present invention also provides a method to realize personal big data management and authorization, as shown in Fig. 2, the method includes the following steps:
(a) the big data server analyzes data authorization requests sent from enterprises, and queries to get target users conforming to the data authorization requests;
(b) the big data server pushes the data authorization requests to the clients which the target users have logged in;
(c) the client processes corresponding authorization dispositions to the data authorization requests sent from the big data server according to the target users' authorization selection operations;
(d) the big data server sends the authorized data of the target users who have agreed to authorize to the enterprise according to authorization feedback information of the client which the target users have logged in.

In a preferred embodiment of the present invention, the big data server has an enterprise interface module and an authorization management module, the big data server analyzes data authorization requests sent from enterprises, and queries to get target users conforming to the data authorization requests, including the following steps:
(a.1) the enterprise interface module receives the data authorization requests sent by the enterprise, and sends the data authorization requests to the authorization management module;
(a.2) the authorization management module analyzes the data authorization requests, and queries to get target users conforming to the data authorization requests.

In a more preferred embodiment of the present invention, the authorization management module analyzes the data authorization requests, and queries to get target users conforming to the data authorization requests, including the following steps:
(a.2.1) the authorization management module analyzes the data authorization requests and gets multiple data selection criteria;
(a.2.2) the authorization management module judges whether each data selection criteria is standard selection criteria;
(a.2.3) if the judgement result is the data selection criteria is standard selection criteria, then continue to step (a.2.4), otherwise continue to step (a.2.5);
(a.2.4) the authorization management module automatically transforms the data authorization requests into database query statements which can be executed automatically by the big data server program, and queries to get the target users conforming to the data authorization requests, and return to the above step (b);
(a.2.5) the service provider of the big data server contacts the enterprise, and understands the concrete meaning and requirement of non-standard selection criteria, then return to the above step (a.2.4).

In a more preferred embodiment of the present invention, the big data server has a client communication module, the client has a server communication module, the big data server pushes the data authorization requests to the clients which the target users have logged in, including the following steps:
(b.1) the authorization management module queries to get the information of the clients which the target users have logged in currently;
(b.2) the authorization management module sends the information of the clients which the target users have logged in currently to the client communication module;
(b.3) the client communication module pushes the data authorization requests to the server communication module of the clients which the target users have logged in currently according to the information of the clients which the target users have logged in currently.

In a more preferred embodiment of the present invention, the authorization management module queries to get the information of the clients which the target users have logged in currently, including the following steps:
(b.1.1) the authorization management module judges whether there are target users in the currently logged-in users according to information of the target users;
(b.1.2) if the judgement result is there are target users logged in, then continue to step (b.1.3), otherwise continue to step (b.1.4);
(b.1.3) the authorization management module records the information of the clients which the target users have logged in currently, and continue to the above step (b.2);
(b.1.4) the authorization management module feedbacks information to the big data server that there is no target user logged in, and returns to the above step (b.1.1).

In a more preferred embodiment of the present invention, the client has a client data authorization module, the client processes corresponding authorization dispositions to the data authorization requests sent from the big data server according to the target users' authorization selection operations, including the following steps:
(c.1) the client data authorization module receives the data authorization requests forwarded by the server communication module;
(c.2) the client data authorization module displays the data authorization requests, and generates instructions of authorized or not-authorized as the authorization feedback information according to the target users' operations, and sends the authorization feedback information to the server communication module;
(c.3) the server communication module uploads the authorization feedback information to the big data server.

In a more preferred embodiment of the present invention, the big data server has an authorization management module, the big data server sends the authorized data of the target users who have agreed to authorize to the enterprise according to authorization feedback information of the clients which the target users have logged in, including the following steps:
(d.1) the client communication module receives the authorization feedback information uploaded through the server communication module by the client that the target users logged in and sends the authorization feedback information to the authorization management module;
(d.2) the authorization management module retrieves the corresponding authorized data according to the authorization feedback information to the enterprise interface module;
(d.3) the enterprise interface module sends the authorized data to the enterprise.

In a more preferred embodiment of the present invention, the big data server also has a data product module, after step (d), it also includes the following steps:
(e) the data product module processes users' data and generates all kinds of data products.

In a more preferred embodiment of the present invention, the client has a data product management module, after step (e), there are also the following steps:
(f) the data product management module generates the corresponding data product management instructions according to the logged-in user's operations, and sends the data product management instructions to the server communication module;
(g) the server communication module synchronizes the data product management instructions to the client communication module;
(h) the big data server manages the data products according to the data product management instructions.

In a more preferred embodiment of the present invention, the client has a user basic information management module, before step (a), there are also the following steps:
(0.1) the user basic information management module generates personal basic information management instructions according to the user's operations, and sends the personal basic information management instructions to the server communication module;
(0.2) the server communication module synchronizes the personal basic information management instructions to the client communication module.
(0.3) the big data server manages the personal basic information according to the personal basic information management instructions.

In a more preferred embodiment of the present invention, the big data server also has a user registration & login authentication module, after step (0.3), there is also the following step:
(0.4) the user registration & login authentication module adds new user information in the big data server, and provides authentication information when user logs in.

In a more preferred embodiment of the present invention, the big data server has a server revenue management module, after step (e), there is also the following step:
(F) the server revenue management module records and processes the transaction information between the user and the enterprise, and transfers the transaction revenue to the user's bank account.

In a more preferred embodiment of the present invention, the client has a client revenue management module, after step (F), there is also the following step:
(G) the client revenue management module retrieves the transaction information according to the user's operations through the server communication module, and manages the user's bank account according to the user's operations.

In a more preferred embodiment of the present invention, between steps (a) and (b), there is also the following step:
(a.a) the big data server classifies the data automatically based on the data characteristic, data source and data timestamp.

In a more preferred embodiment of the present invention, the big data server also includes data storage module, after step (e), there is also the following step:
(e.a) the data storage module stores the users' personal basic information, the logged-in users' data, the data corresponding to the data products, the authorized data and other system data.

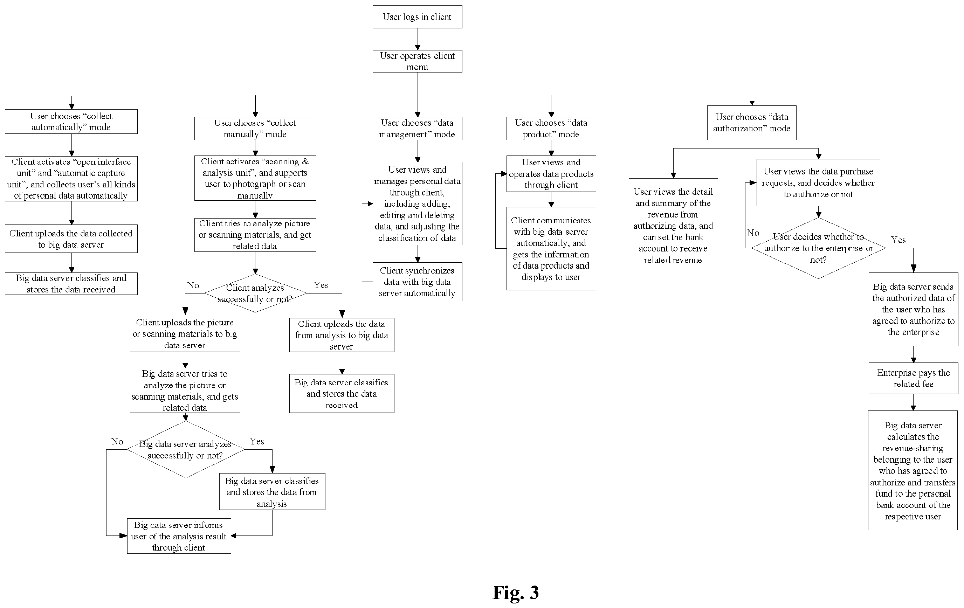

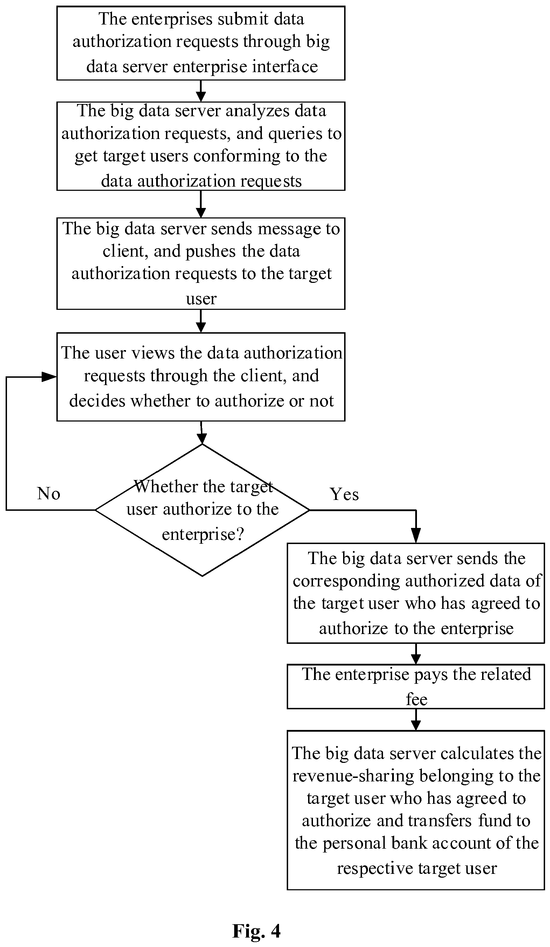

As shown in Fig. 3, it's a preferred specific embodiment of the present invention, which includes the following functions:
1. The client software collects the user's all kinds of personal data automatically or manually, and uploads and stores in the big data server. The big data server classifies the data automatically based on the logic defined in advance.
   Wherein, the big data server classifies the data automatically based on the logic defined in advance can include using the following several classification logics at the same time:
   (a) Classify based on the data's characteristic. For example major categories can include: behavior data, body data, seeing data and so on. The behavior data major category can be divided into smaller categories like consumption purchase data, searching and reading data, physical location data and so on, the body data major category can be divided into smaller categories like heart beat data, sleeping data, exercise data and so on.
   (b) Classify based on data source. For example major categories can include: application data, website data, scanning data and so on. The application data major category can be divided into smaller categories like Taobao App application data, CTrip App application data, Dianping App application data and so on. The scanning data major category can be divided into smaller categories like phone&broadband billing statements, utility billing statements, credit card billing statements and so on.
   (c) Classify based on data timestamp. For example major categories can include: natural calendar, weekday/weekend, festival&celebration, the natural calendar major category can be divided into smaller categories like year, month, week, day and so on. The festival& celebration major category can be divided into smaller categories like Spring Festival, National Day, Valentines' Day and so on.
2. The user can log in the client software to view and manage personal big data, including adding, editing and deleting data, and adjusting the classification of data. The client software and the big data server will synchronize data automatically.
3. The user can view and operate data products through client software. The data product is produced by the big data server based on computational formulas and display templates designed in advance and through processing of the personal big data in ways like preparation, analysis, summarization, correlation and so on , the result product is provided to the user through the client software.
   Wherein, the data products may include the following types:
   (a) Data product in personal dimension: the big data server can process the personal big data in ways like preparation, analysis, summarization and so on, and provides the result after processing to the user in the form of data product through the client software. The examples of data products in personal dimension include personal monthly income summarization and fluctuation trend, personal monthly spending summarization and fluctuation trend and so on.
   (b) Data product in family dimension: based on the authorization to each other between two or more related users (like husband and wife), the big data server can process the personal big data of the related users in ways like preparation, analysis, summarization and so on, and provides the result after processing to the users in the form of data product through the client software. The examples of data products in family dimension include family monthly income summarization and fluctuation trend, family monthly spending summarization and fluctuation trend and so on.
   (c) Data product in group dimension: the big data server can process the personal big data of the user group to which the user belong in ways like preparation, analysis, summarization and so on, and provides the result after processing to the users in the form of data product through the client software. The possible user group definition parameters include: country, territory (province/state, city, neighborhood and so on), friend circle, relationship circle and so on. The examples of the data products in group dimension include personal monthly income ranking in city, personal monthly income ranking in neighborhood, personal monthly spending ranking in friend circle and so on.
4. The big data server can open interface to enterprises that have interest of buying personal big data, as shown in Fig. 4, the enterprises submit data authorization requests through the interface, and the said requests are pushed to the users conforming to the requirements through the client software. The user can view the said data authorization requests through the client software, and decide whether to authorize or not. If the user operates to authorize, then the big data server will process the related personal big data based on the user's authorization into the form that the enterprise wanted, then provide it to the enterprise through the interface. The fees that the enterprise pays to buy the user's personal big data will be settled according to the revenue sharing agreement reached in advance between the service provider of the present invention and the user.
   Wherein, the data authorization requests submitted by the enterprise through the big data server interface can include several kinds of data selection criteria, for example:
   (a) standard selection criteria, stated in standard data format defined in advance, such as: the user's age, sex, living area and so on; the user's online shopping frequency and amount such as shopping on Taobao at least once a week or spending at least 200 Yuan every month on Taobao shopping and so on; the user's dining-out frequency and amount such as dining out at least once a week or spending at least 400 Yuan every month for dining out and so on.
   (b) non-standard selection criteria, described in natural language and stated in "remark" kind of fields.

Furthermore, after the big data server has received the data authorization requests, it can select and match the users conforming to the criteria in the following steps:
(a) As to the standard selection criteria in the data authorization requests submitted by the enterprise, the big data server automatically transforms it into database query statements which can be executed automatically by the big data server program, and then executes the database query statements to realize the selection and matching.
(b) As to the non-standard selection criteria in the data authorization requests submitted by the enterprise, the customer service personnel of the service provider of the present invention will contact the enterprise, to understand the concrete meaning and requirement of non-standard selection criteria, and then transforms it into database query statements which can be executed automatically by the big data server program, and then executes the database query statements to realize the further selection and matching.

Utilizing the present invention of the system and method to realize personal big data collection, management and authorization, the user's personal data can be collected and stored automatically, it supports the user to view and manage his/her own personal data, and it supports the user to authorize his/her own personal data to interested enterprise and get money or material rewards. At the same time, the present invention supports processing of the user's personal data such as preparation, analysis, summarization, correlation and so on, and provides results to the user in the form of data products, gives useful information to individual and family in the aspects of life management, financial management, decision support and so on, so that the user can enjoy the value of data analysis and mining, it has a wider application range.

In this specification, the present invention has been described with references to the specific embodiments. However, obviously modifications and variations still can be made without departing from the spirit and scope of the present invention. Accordingly, the specification and drawings are to be regarded as illustrative rather than restrictive.

## Claims

**1.** A system to realize personal big data collection, management and authorization, **characterized in that**, the system includes:
Several clients, used to collect the data of the logged-in users on the clients automatically, and upload the data of the logged-in users to big data server, and authorize selectively to data authorization requests sent from the big data server according to the target users' operations;
Big data server, used to analyze data authorization requests sent from enterprises and query to get target users conforming to the data authorization requests, and push the data authorization requests to the clients which the target users have currently logged in, and send the authorized data of the target users who have agreed to authorize to the enterprise according to authorization feedback information of the client which the target users have currently logged in.

**2.** The system to realize personal big data collection, management and authorization according to claim 1, **characterized in that**, the client has a user big data collection module, a server communication module, a data management module, and a client data authorization module, wherein:
The user big data collection module, used to collect data of the logged-in users on the clients automatically and send the data of the logged-in users to the server communication module;
The server communication module, used to connect to the big data server, and communicate information with the big data server;
The data management module, used to generate the corresponding data management operation instructions based on target users' operations, and send the data management operation instructions to the server communication module;
The client data authorization module, used to receive the data authorization requests forwarded by the server communication module for the currently logged-in target users , and generate instructions of authorized or not-authorized as the authorization feedback information according to the target users' operations, and send the authorization feedback information to the server communication module.

**3.** The system to realize personal big data collection, management and authorization according to claim 2, **characterized in that**, the user big data collection module further has an open interface unit, an automatic capture unit, and a scanning & analysis unit, wherein:
The open interface unit, used to connect to the data interface of other operating system or application software, and collect the data of the logged-in user on the client automatically through the data interface;
The automatic capture unit, used to automatically captures and analyzes the display information on the client's screen and the user's input information, and collects the data of the logged-in user through the display information and input information;
The scanning analysis unit, used to analyze the client's picture material or scanning material and get the logged-in user's data, and upload the picture material or scanning material which cannot be analyzed by itself to the big data server for further analysis.

**4.** The system to realize personal big data collection, management and authorization according to claim 3, **characterized in that**, the big data server has a server data analysis module, the server data analysis module is used to further analyze the picture material or scanning material uploaded by the scanning analysis unit which cannot be analyzed by itself, and get the data of the logged-in user.

**5.** The system to realize personal big data collection, management and authorization according to claim 1, **characterized in that**, the client has a client revenue management module and a data product management module, wherein:
The client revenue management module, used to retrieve the transaction information stored in the big data server according to the logged-in user's operations, and manage the logged-in user's bank account according to the logged-in user's operations;
The data product management module, used to generate the corresponding data product management instructions according to the logged-in user's operations, and send the data product management instructions to the big data server.

**6.** The system to realize personal big data collection, management and authorization according to claim 1, **characterized in that**, the client has a user basic information management module, the user basic information management module is used to generate personal basic information management instructions according to the logged-in user's operations, and send the personal basic information management instructions to the big data server.

**7.** The system to realize personal big data collection, management and authorization according to claim 1, **characterized in that**, the big data server has a client communication module, an enterprise interface module and an authorization management module, wherein:
The client communication module, used to connect to the several clients, and communicate information with the several clients through the Internet or local network;
The enterprise interface module, used to receive the data authorization requests sent by the enterprises, and send the data authorization requests to the authorization management module, and process the authorized data and send the processed authorized data to the enterprises;
The authorization management module, used to analyze the data authorization requests and query to get the target users conforming to the data authorization requests, and send the data authorization requests to the client communication module which the target users have logged in, and according to authorization feedback information of the client which the target users have logged in transmitted by the client communication module to retrieve the authorized data of the target users who have agreed to authorize to send to the enterprise interface module.

**8.** The system to realize personal big data collection, management and authorization according to claim 1, **characterized in that**, the big data server also includes a data product module and a revenue management module, wherein:
The data product module, used to process the user's data stored in the big data server and generate all kinds of data products;
The server revenue management module, used to record and process the transaction information between the user and the enterprise, and transfer the transaction revenue to the user's bank account.

**9.** The system to realize personal big data collection, management and authorization according to claim 1, **characterized in that**, the big data server also includes a user registration & login authentication module, the user registration & login authentication module is used to add new user information in the big data server, and provide authentication information when user log in.

**10.** The system to realize personal big data collection, management and authorization according to any item of claims 1∼9, **characterized in that**, the big data server also includes a data storage module, the data storage module is used to store in classification the users' personal information, the logged-in users' data, the data corresponding to the data products, the authorized data and other data of the big data server.

**11.** A method to realize personal big data collection based on the system of claim 1, **characterized in that**, the method specifically is:
The client collects the data of the logged-in user on the client automatically, and uploads the data of the logged-in user to the big data server.

**12.** The method to realize personal big data collection according to claim 11, **characterized in that**, the client has a user big data collection module and a server communication module, the client collects the data of the logged-in user on the client automatically, and uploads the data of the logged-in user to the big data server, including the following steps:
(1.1) the server communication module connects to the big data server;
(1.2) the user big data collection module collects data of the logged-in user on the client automatically and sends the data of the logged-in user to the server communication module;
(1.3) the server communication module sends the data of the logged-in user to the big data server.

**13.** The method to realize personal big data collection according to claim 12, **characterized in that**, the user big data collection module has an open interface unit, the user big data collection module collects data of the logged-in user on the client automatically, including the following steps:
(1.2.1) the user big data collection module judges whether it has received the control instruction to activate the open interface unit;
(1.2.2) if the judgement result is having received the control instruction to activate the open interface unit, then continue to step (1.2.3), otherwise return to the above step (1.2);
(1.2.3) the open interface unit connects to the data interface of other operating system or application software, and collects the data of the logged-in user on the client automatically through the data interface.

**14.** The method to realize personal big data collection according to claim 12, **characterized in that**, the user big data collection module further has an automatic capture unit, the user big data collection module collects data of the logged-in user on the client automatically, including the following steps:
(1.2.a) the user big data collection module judges whether it has received control instruction to activate the automatic capture unit;
(1.2.b) if the judgement result is having received the control instruction to activate the automatic capture unit, then continue to step (1.2.c), otherwise return to the above step (1.2);
(1.2.c) the automatic capture unit automatically captures and analyzes the display information on the client's screen and the user's input information, and collects the data of the logged-in user through the display information and input information.

**15.** The method to realize personal big data collection according to claim 12, **characterized in that**, the user big data collection module further has a scanning analysis unit, the user big data collection module collects data of the logged-in user on the client automatically, including the following steps:
(1.2.A) the user big data collection module judges whether it has received the control instruction to activate the scanning analysis unit;
(1.2.B) if the judgement result is having received the control instruction to activate the scanning analysis unit, then continue to step (1.2.C), otherwise return to the above step (1.2);
(1.2.C) the scanning analysis unit analyzes the client's picture material or scanning material and gets the logged-in user's data.

**16.** The method to realize personal big data collection, management and authorization according to claim 15, **characterized in that**, after step (1.2.C), further includes the following steps:
(1.2.D) the scanning analysis unit judges whether there is picture material or scanning material which cannot be analyzed by itself;
(1.2.E) if the judgement result is that there is picture material or scanning material which cannot be analyzed by itself, then continue to step (1.2.F), otherwise continue to step (1.1.2);
(1.2.F) the scanning analysis unit sends the picture material or scanning material which cannot be analyzed by itself to the server communication module;
(1.2.G) the server communication module uploads the picture material or scanning material which cannot be analyzed to the big data server.

**17.** The method to realize personal big data collection according to claim 16, **characterized in that**, the big data server has a server data analysis module, after step (1.2.G), there are also the following steps:
(1.2.H) the server data analysis module further analyzes the picture material or scanning material which cannot be analyzed initially, and get the logged-in user's data.

**18.** A method to realize personal big data management and authorization based on the method of claim 11, **characterized in that**, the method includes the following steps:
(a) the big data server analyzes data authorization requests sent from enterprises, and queries to get target users conforming to the data authorization requests;
(b) the big data server pushes the data authorization requests to the clients which the target users have logged in;
(c) the client processes corresponding authorization dispositions to the data authorization requests sent from the big data server according to the target users' authorization selection operations;
(d) the big data server sends the authorized data of the target users who have agreed to authorize to the enterprise according to authorization feedback information of the client which the target users have logged in.

**19.** The method to realize personal big data management and authorization according to claim 18, **characterized in that**, the big data server has an enterprise interface module and an authorization management module, the big data server analyzes data authorization requests sent from enterprises, and query to get target users conforming to the data authorization requests, including the following steps:
(a.1) the enterprise interface module receives the data authorization requests sent by the enterprises, and sends the data authorization requests to the authorization management module;
(a.2) the authorization management module analyzes the data authorization requests, and queries to get target users conforming to the data authorization requests.

**20.** The method to realize personal big data management and authorization according to claim 19, **characterized in that**, the authorization management module analyzes the data authorization requests, and queries to get target users conforming to the data authorization requests, including the following steps:
(a.2.1) the authorization management module analyzes the data authorization requests and gets multiple data selection criteria;
(a.2.2) the authorization management module judges whether each data selection criteria is standard selection criteria;
(a.2.3) if the judgement result is the data selection criteria is standard selection criteria, then continue to step (a.2.4), otherwise continue to step (a.2.5);
(a.2.4) the authorization management module automatically transforms the data authorization requests into database query statements which can be executed automatically by the big data server program, and queries to get the target users conforming to the data authorization requests, and return to the above step (b);
(a.2.5) the service provider of the big data server contacts the enterprise, and understands the concrete meaning and requirement of non-standard selection criteria, then return to the above step (a.2.4).

**21.** The method to realize personal big data management and authorization according to claim 19, **characterized in that**, the big data server has a client communication module, the client has a server communication module, the big data server pushes the data authorization requests to the clients which the target users have logged in, including the following steps:
(b.1) the authorization management module queries to get the information of the clients which the target users have logged in currently;
(b.2) the authorization management module sends the information of the clients which the target users have logged in currently to the client communication module;
(b.3) the client communication module pushes the data authorization requests to the server communication module of the clients which the target users have logged in currently according to the information of the clients which the target users have logged in currently.

**22.** The method to realize personal big data management and authorization according to claim 21, **characterized in that**, the authorization management module queries to get the information of the clients which the target users have logged in currently, including the following steps:
(b.1.1) the authorization management module judges whether there are target users in the currently logged-in users according to information of the target users;
(b.1.2) if the judgement result is there are target users logged in, then continue to step (b.1.3), otherwise continue to step (b.1.4);
(b.1.3) the authorization management module records the information of the clients which the target users have logged in currently, and continue to the above step (b.2);
(b.1.4) the authorization management module feedbacks information to the big data server that there is no target user logged in, and returns to the above step (b.1.1).

**23.** The method to realize personal big data management and authorization according to claim 22, **characterized in that**, the client has a client data authorization module, the client processes corresponding authorization dispositions to the data authorization requests sent from the big data server according to the target users' authorization selection operations, including the following steps:
(c.1) the client data authorization module receives the data authorization requests forwarded by the server communication module;
(c.2) the client data authorization module displays the data authorization requests, and generates instructions of authorized or not-authorized as the authorization feedback information according to the target users' operations, and sends the authorization feedback information to the server communication module;
(c.3) the server communication module uploads the authorization feedback information to the big data server.

**23.** The method to realize personal big data management and authorization according to claim 21, **characterized in that**, the big data server has an authorization management module, the big data server sends the authorized data of the target users who have agreed to authorize to the enterprise according to authorization feedback information of the clients which the target users have logged in, including the following steps:
(d.1) the client communication module receives the authorization feedback information uploaded through the server communication module by the client that the target users logged in and sends the authorization feedback information to the authorization management module;
(d.2) the authorization management module retrieves the corresponding authorized data according to the authorization feedback information to the enterprise interface module;
(d.3) the enterprise interface module sends the authorized data to the enterprise.

**24.** The method to realize personal big data collection, management and authorization according to claim 18, **characterized in that**, the big data server also has a data product module, after step (d), it also includes the following steps:
(e) the data product module processes users' data and generates all kinds of data products.

**25.** The method to realize personal big data collection, management and authorization according to claim 24, **characterized in that**, the client has a data product management module, after step (e), there are also the following steps:
(f) the data product management module generates the corresponding data product management instructions according to the logged-in user's operations, and sends the data product management instructions to the server communication module;
(g) the server communication module synchronizes the data product management instructions to the client communication module;
(h) the big data server manages the data products according to the data product management instructions.

**26.** The method to realize personal big data collection, management and authorization according to claim 21, **characterized in that**, the client has a user basic information management module, before step (a), there are also the following steps:
(0.1) the user basic information management module generates personal basic information management instructions according to the user's operations, and sends the personal basic information management instructions to the server communication module;
(0.2) the server communication module synchronizes the personal basic information management instructions to the client communication module.
(0.3) the big data server manages the personal basic information according to the personal basic information management instructions.

**27.** The method to realize personal big data collection, management and authorization according to claim 26, **characterized in that**, the big data server also has a user registration & login authentication module, after step (0.3), there is also the following step:
(0.4) the user registration & login authentication module adds new user information in the big data server, and provides authentication information when user logs in.

**28.** The method to realize personal big data collection, management and authorization according to claim 12, **characterized in that**, the big data server has a server revenue management module, after step (e), there is also the following step:
(F) the server revenue management module records and processes the transaction information between the user and the enterprise, and transfers the transaction revenue to the user's bank account.

**29.** The method to realize personal big data collection, management and authorization according to claim 28, **characterized in that**, the client has a client revenue management module, after step (F), there is also the following step:
(G) the client revenue management module retrieves the transaction information according to the user's operations through the server communication module, and manages the user's bank account according to the user's operations.

**30.** The method to realize personal big data management and authorization according to any item of claims 18∼29, **characterized in that**, between steps (a) and (b), there is also the following step:
(a. a) the big data server classifies the data automatically based on the data characteristic, data source and data timestamp.

**31.** The method to realize personal big data management and authorization according to any item of claims 18∼29, **characterized in that**, the big data server also includes a data storage module, after step (e), there is also the following step:
(e.a) the data storage module stores the users' personal basic information, the logged-in users' data, the data corresponding to the data products, the authorized data and other system data.
